# EUROPÄISCHE PATENTANMELDUNG

(11) **EP 2 309 103 A2**
(43) Veröffentlichungstag der Anmeldung: **13.04.2011**
(21) Anmeldenummer: 10013150.7
(22) Anmeldetag: 01.10.2010
(51) Int. Cl.: F01N 3/031, F01N 3/20, F01N 3/035, F01N 3/023

(54) **Abgasvorrichtung einer Brennkraftmaschine**

(30) Priorität: 08.10.2009 DE 102009048799
(71) Anmelder: DEUTZ Aktiengesellschaft, 51149 Köln (DE)
(72) Erfinder: Nork, Benedikt, 50679 Köln (DE); Bülte, Heiner, Dr., 40668 Meerbusch (DE)

(57) **Zusammenfassung**

Gesteuerter Bypass (3) im Abgasnachbehandlungssystem für Nutzfahrzeuge und Industriemotoren und Abgasvorrichtung, insbesondere einer Diesel-Brennkraftmaschine, umfassend wenigstens einen DOC (4), wenigstens einen DPF (5), wenigstens einen SCR (6) sowie wenigstens ein offenes Bypassfeuerrohr (7) und wenigstens eine Bypassklappe (3).

## Beschreibung

Gesteuerter Bypass im Abgasnachbehandlungssystem für Nutzfahrzeuge und Industriemotoren

Bekannte Abgasnachbehandlungssysteme, die auch als Exhaust After Treatment System (EATS) von Arbeitsmaschinen und Nutzfahrzeugen bezeichnet werden, werden immer vom gesamten Abgasmassenstrom des Motors durchströmt. Dabei ergibt sich die Temperatur im EATS aus der Temperatur des Motorabgases und gegebenenfalls eines nachgeschalteten Brenners.

Bei sehr niedriger Motorlast und ohne Brenner hat ein Dieselmotor Abgastemperaturen zwischen 100 und 200 °C. Diese niedrigen Temperaturen führen bei längerem Teillastbetrieb zu einer Auskühlung des EATS.

Durch die Auskühlung des EATS ergeben sich die folgenden Nachteile.

Das Unterschreiten der Anspringtemperatur, oder auch light-off-Temperatur genannt, von Katalysatoren (DOC (Diesel Oxidation Catalyst) / SCR-Katalysator (Selected Catalytic Reduction, bzw. Stickoxide reduzierendes Abgasnachbehandlungssystem, insbesondere mittels Ammoniak)).

Alle Katalysatoren unterstützen eine chemische Reaktion im Abgas, die die Reduktion einer schädlichen Emission bewirkt. Wird die light-off-Temperatur des Katalysators unterschritten, kommt die chemische Reaktion zum Erliegen, der Katalysator wird unwirksam.

Kein Abbau von Ruß durch Reduktion mit N02.

Der bei der Dieselverbrennung unvermeidliche Ruß kann in einem Rußfilter gesammelt und den Motorabgasen somit entzogen werden. Zusammen mit N02 kann sich dieser Ruß ab einer bestimmten Temperatur im Partikelfilter selbstständig abbauen. Dieser passive Regenerationsprozess des Rußfilters erfordert ebenfalls eine bestimmte Mindesttemperatur.

Es ist die Aufgabe der vorliegenden Erfindung, die vorstehenden Nachteile zu vermeiden und eine Abgasvorrichtung einer Brennkraftmaschine und ein Verfahren zur Abgasnachbehandlung zu schaffen, die geltende und künftige Abgasnormen einhalten.

Diese Aufgabe wird durch die Merkmale von Anspruch 1 und 10 gelöst. Bevorzugte Ausführungsformen sind in den Unteransprüchen aufgeführt. Erfindungsgemäß ist vorgesehen, die Auskühlung des EATS zu vermeiden, da deren Effizienz bei der Reduktion der schädlichen Motoremissionen verbessert wird.

Die erfindungsgemäße Vorrichtung ist von einfacher und kostengünstig herstellbarer Bauweise, die sich in einfacher Weise steuern lässt und funktionssicher arbeitet.

Nachfolgend werden die Erfindung bzw. weitere erfindungsgemäße Funktionskriterien und Maßnahmen sowie durch sie erzielbare Vorteile anhand weiterer Ausführungsbeispiele und Zeichnungen näher erläutert.

Es zeigen:
- Figur 1: EATS-Bypass im niederlastigen Betrieb
- Figur 2: EATS im Normalbetrieb
- Figur 3: Bypass zwischen DPF und SCR, SCR wird durchströmt
- Figur4: Bypass zwischen DPF und SCR

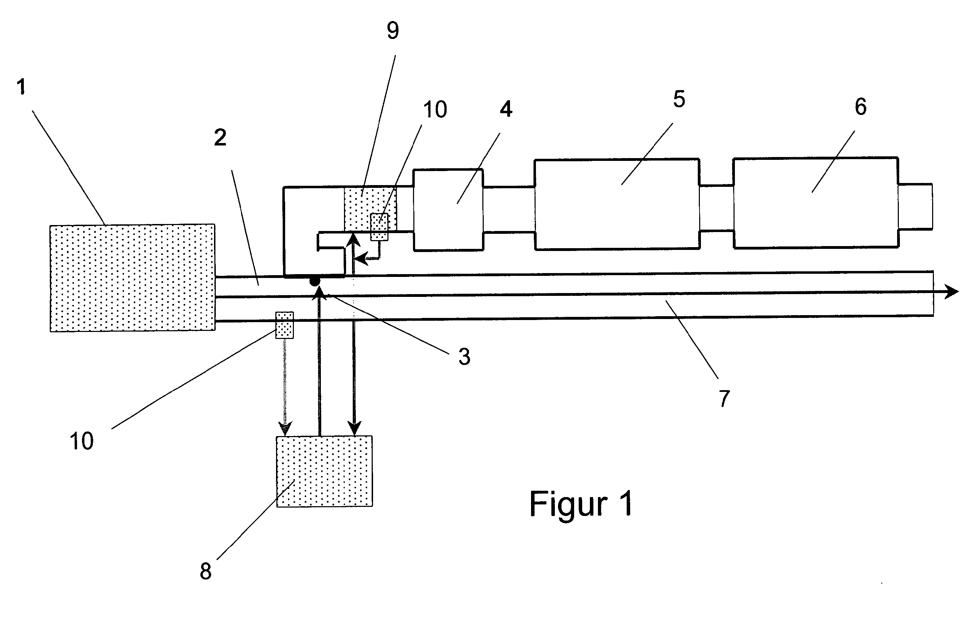

Figur 1 zeigt einen Motor 1, in dessen Abgasleitung 2 eine Bypassklappe 3 angeordnet ist. Die Bypassklappe 3 kommuniziert mit einer Bypassleitung 7 und einer alternativen Leitungsstrecke, in der ein Katalysator (DOC) 4, ein Partikelfilter (DPF) 5 und ein Katalysator (SCR) 6 nacheinander in Strömungsrichtung des Abgases angeordnet sind. In dieser alternativen Leitungsstrecke sind ein Verdampfer 9 und ein Brenner 9 sowie Sensoren 10 zur Ermittlung von Temperatur, Druck und Geschwindigkeit angeordnet. Derartige Sensoren 10 sind auch in der Bypassleitung 7 angeordnet. Verdampfer bzw. Brenner 9, Sensoren 10 und Bypass 3 kommunizieren mit der Motorsteuerung 8 in der Weise, dass die Sensoren 10 die Systemparameter an die Steuerung 8 mittels Leitungs- und/oder Funkverbindung übermitteln, wobei die computergesteuerte Motorsteuerung 8 diese übermittelten Parameter auswertet und als Reaktion darauf Steuersignale an Verdampfer, bzw. Brenner 9 und/oder Bypassklappe 3 übermittelt.

Zur Vermeidung der Auskühlung des EATS kommt der Abgasnachbehandlungs-Bypass 3 zur Anwendung. Dieser besteht aus einer oder mehreren Klappen im EATS, die mittels des Motormanagements 8 geschaltet werden können. Durch das Öffnen oder das Schließen der Bypass-Klappe 3 oder der Bypass-Klappen 3 wird das Abgas entweder direkt in die Umgebung, oder durch emissionsreduzierende Teilsysteme wie DOC 4, Partikelfilter (DPF) 5 oder SCR 6 des EATS geleitet.

In der Variante Figur 1 ist der Bypass 3 geöffnet, so dass alle abgasreinigenden Systeme des EATS (DOC 4. DPF 5, SCR 6) umgangen werden.

Bei niederlastigem Motorbetrieb werden so die relativ kühlen Motorabgase an allen Katalysatoren 4, 6 und dem Partikelfilter 5 vorbeigeführt, wodurch diese nicht so stark abgekühlt werden. Zusammen mit einem intelligenten Motormanagement 8 kann der Schaltpunkt der Klappe 3 so programmiert werden, dass der Wirkungsgrad der Abgasreinigung insgesamt deutlich verbessert werden kann. Bei ungewollter Verstopfung des Partikelfilters 5 kann bei dieser Variante durch Öffnen des Bypasses 3 die Betriebsfähigkeit des Motors 1 aufrechterhalten werden. Durch diese Notfunktion kann eine Beschädigung des Motors 1 und/oder des EATS vermieden werden, obwohl das Fahrzeug trotz Partikelfilterverstopfung noch fahrfähig wäre.

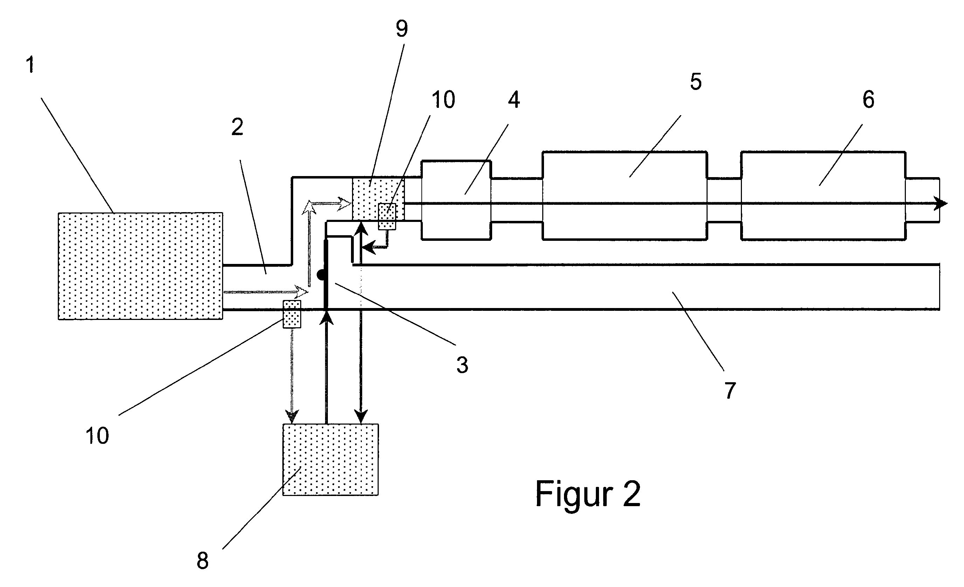

In Figur 2 ist die Bypass-Klappe 3 so geschaltet, dass die heißen Motorabgase das EATS durchströmen und dieses aufheizen. Das EATS arbeitet bei einer Temperatur von etwa 350 °C am wirkungsvollsten.

Figur 2 zeigt einen Motor 1, in dessen Abgasleitung 2 die geschlossene Bypassklappe 3 derart angeordnet ist, dass die Bypassklappe 3 die Abgasleitung 2 mit dem Katalysator (DOC) 4, dem Partikelfilter (DPF) 5 und dem Katalysator (SCR) 6 nacheinander in Strömungsrichtung des Abgases angeordnet verbindet. In dieser Leitungsstrecke sind ein Verdampfer 9 und ein Brenner 9 sowie Sensoren 10 zur Ermittlung von Temperatur, Druck und Geschwindigkeit angeordnet. Derartige Sensoren 10 sind auch in der in Figur 2 umgangenen Bypassleitung 7 angeordnet. Verdampfer bzw. Brenner 9, Sensoren 10 und Bypass 3 kommunizieren mit der Motorsteuerung 8 in der Weise, dass die Sensoren 10 die Systemparameter an die Steuerung 8 mittels Leitungs- und/oder Funkverbindung übermitteln, wobei die computergesteuerte Motorsteuerung 8 diese übermittelten Parameter auswertet und als Reaktion darauf Steuersignale an Verdampfer bzw. Brenner 9 und/oder Bypassklappe 3 übermittelt.

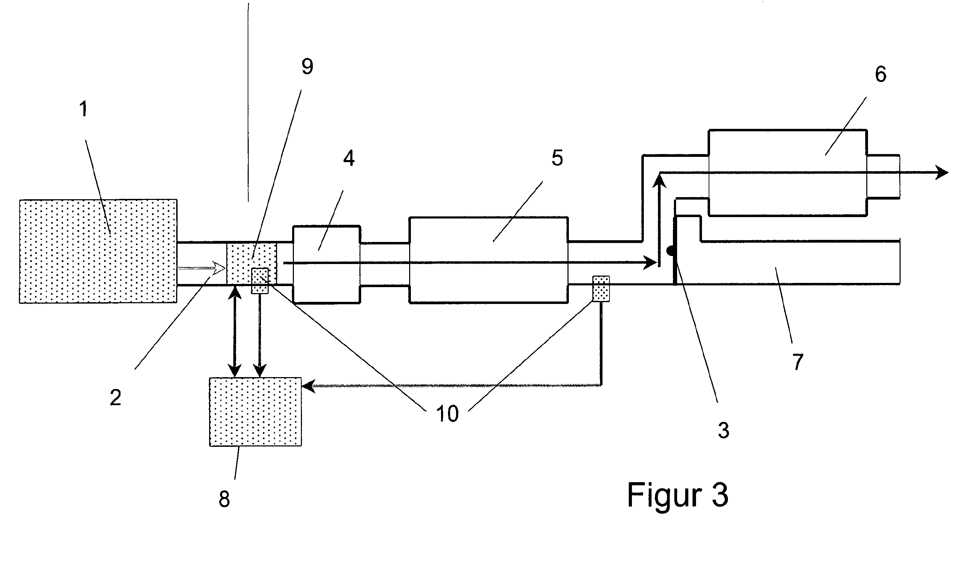

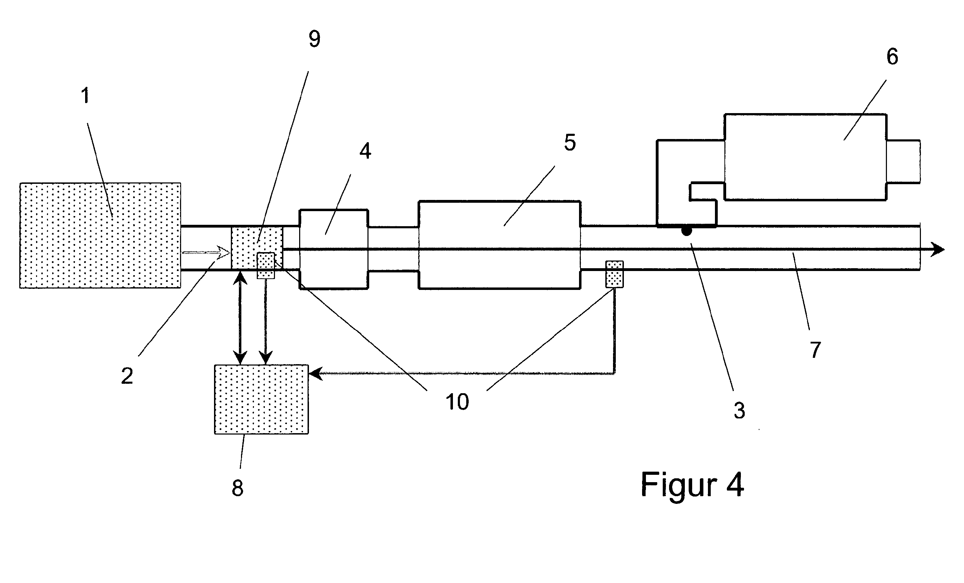

In der Variante gemäß Figur 3 und 4 wird der Bypass 3 so installiert, dass bei Betätigung nur der SCR-Katalysator 6 vom Abgas durchströmt oder nicht durchströmt wird, DOC 4 und DPF 5 werden bei dieser Variante immer vom gesamten Abgas durchströmt.

Der Partikelfilter 5 wird bei Variante b immer durchströmt. Es kann kein Ruß ungefiltert in die Umgebung gelangen. Rauchstöße werden vermieden, durch geschicktes Programmieren des Motormanagements 8 kann der SCR-Katalysator 6 auch bei Schwachlastbetrieb auf hoher Temperatur und somit wirksam gehalten werden. Das Auskühlen des SCR 6 wird durch das Zusammenspiel von Sensoren 10 und Bypass 3 vermieden. Einen weiteren vorteilhaften temperatursteigernden Effekt leisten die Verdampfer/Brenner 9, die gegebenenfalls von der Motorsteuerung 8 aktiviert werden.

### Bezugszeichenliste

- 1: Brennkraftmaschine
- 2: Abgasleitung
- 3: Bypassklappe
- 4: Katalysator (DOC)
- 5: Partikelfilter (DPF)
- 6: Katalysator (SCR)
- 7: Bypassleitung
- 8: Motorsteuerung/ -management
- 9.: Brenner/Verdampfer
- 10.: Sensoren (Druck, Temperatur, Geschwindigkeit, Sauerstoffgehalt)

## Patentansprüche

1. Abgasvorrichtung, insbesondere einer Diesel-Brennkraftmaschine, umfassend wenigstens einen DOC, wenigstens einen DPF, wenigstens einen SCR sowie wenigstens ein offenes Bypassfeuerrohr und wenigstens eine Bypassklappe.

2. Abgasvorrichtung einer (Diesel-)Brennkraftmaschine nach Anspruch 1, **dadurch gekennzeichnet, dass** die Bypassklappe in Strömungsrichtung des Abgases vor dem DOC angeordnet ist.

3. Abgasvorrichtung einer (Diesel-)Brennkraftmaschine nach Anspruch 1, **dadurch gekennzeichnet, dass** die Bypassklappe in Strömungsrichtung des Abgases vor dem SCR und nach dem DPF angeordnet ist.

4. Abgasvorrichtung einer (Diesel-)Brennkraftmaschine nach Anspruch 1, **dadurch gekennzeichnet, dass** die Bypassklappe in Strömungsrichtung des Abgases vor dem DPF und nach dem DOC angeordnet ist.

5. Abgasvorrichtung einer (Diesel-)Brennkraftmaschine nach einem oder mehreren der vorgenannten Ansprüche,
**dadurch gekennzeichnet, dass** sie wenigstens einen Brenner und/oder Verdampfer aufweist.

6. Abgasvorrichtung einer (Diesel-)Brennkraftmaschine nach einem oder mehreren der vorgenannten Ansprüche,
**dadurch gekennzeichnet, dass** sie wenigstens einen Temperatursensor zur Ermittlung der Abgastemperatur aufweist, wobei der Temperatursensor im DOC und/oder im DPF und/oder im SCR und/oder im Flammrohr und/oder vor der Bypassklappe mit dem Motorsteuergerät kommunizierbar angeordnet ist.

7. Abgasvorrichtung einer (Diesel-)Brennkraftmaschine nach einem oder mehreren der vorgenannten Ansprüche,
**dadurch gekennzeichnet, dass** sie wenigstens einen Druck- bzw. Geschwindigkeitssensor zur Ermittlung des Abgasdrucks aufweist, wobei der Druck- bzw. Geschwindigkeitssensor im DOC und/oder im DPF und/oder im SCR und/oder im Flammrohr und/oder vor der Bypassklappe mit dem Motorsteuergerät kommunizierbar angeordnet ist.

8. Abgasvorrichtung einer (Diesel-)Brennkraftmaschine nach einem oder mehreren der vorgenannten Ansprüche,
**dadurch gekennzeichnet, dass** die Bypassklappe insbesondere durch Steuersignale des Motorsteuergerätes öffen- und/oder schließbar ausgeführt ist.

9. Abgasvorrichtung einer (Diesel-)Brennkraftmaschine nach einem oder mehreren der vorgenannten Ansprüche,
**dadurch gekennzeichnet, dass** sie wenigstens einen Sensor zur Ermittlung der HC und/oder Nox und/oder CO und/oder CO2 und/oder der PartikelKonzentration aufweist und dass der Sensor mit dem Motorsteuergerät kommunizierbar angeordnet ist.

10. Verfahren zur Abgasnachbehandlung von Brennkraftmaschinen, **dadurch gekennzeichnet, dass** eine Abgasvorrichtung nach einem oder mehreren der vorgenannten Ansprüche zum Einsatz kommt.
